**Europäisches Patentamt**

**European Patent Office**

**Office européen des brevets**

(19)

(11) Veröffentlichungsnummer : **0 346 586 B1**

(12) **EUROPÄISCHE PATENTSCHRIFT**

(45) Veröffentlichungstag der Patentschrift :
**18.03.92 Patentblatt 92/12**

(51) Int. Cl.⁵ : **A01F 15/04**

(21) Anmeldenummer : **89106722.5**

(22) Anmeldetag : **14.04.89**

(54) **Regelvorrichtung einer Strohballenpresse.**

(30) Priorität : **15.06.88 DE 3820367**

(43) Veröffentlichungstag der Anmeldung :
**20.12.89 Patentblatt 89/51**

(45) Bekanntmachung des Hinweises auf die
Patenterteilung :
**18.03.92 Patentblatt 92/12**

(84) Benannte Vertragsstaaten :
**BE DE FR IT NL**

(56) Entgegenhaltungen :
**EP-A- 0 152 970**
**EP-A- 0 223 351**
**GB-A- 2 187 417**

(73) Patentinhaber : **CLAAS OHG**
**Münsterstrasse 33**
**W-4834 Harsewinkel 1 (DE)**

(72) Erfinder : **Weddeling, Otger**
**Grüner Grund 12**
**W-4834 Harsewinkel (DE)**
Erfinder : **Homburg, Helmut**
**Breslauer Strasse 35**
**W-4834 Harsewinkel (DE)**

(74) Vertreter : **Hanewinkel, Lorenz, Dipl.-Phys.**
**Patentanwalt Ferrariweg 17a**
**W-4790 Paderborn (DE)**

## Beschreibung

Die Erfindung betrifft eine Ballenpresse mit einer Regelvorrichtung und mit einem in seinem Preßkanalwiderstand steuerbaren Preßkanal, der von einem frontseitig angeordneten Elevator mit Preßgut beschickbar ist und in dem frontseitig ein axial hin- und herbeweglicher Preßkolben an einem Exzentergetriebe angeordnet ist, das über eine Zapfwelle von einem Motor eines Zugfahrzeuges antreibbar ist, und wobei von einem Sensor ein den jeweiligen Preßdruck angebendes Signal der Regelvorrichtung, nämlich einem Summierer, zugeführt ist, der außerdem ein Sollsignal umgekehrter Polarität eines Sollwertgebers zugeführt ist und dessen Ausgangssignal hydraulische Steuermittel des steuerbaren Preßkanals derart beaufschlagen, daß je höher der gemessene Preßdruck ist, um so niedriger der Preßkanalwiderstand gesteuert ist.

Aus DE-OS 26 53 318 ist eine fahrbare Ballenpresse bekannt, die einen Preßkanal für Strohballen besitzt, der mit einem frontseitigen Elevator in voller Kanalbreite von unten mit Stroh oder anderem Preßgut beschickt wird und in dem frontal ein Preßkolben über ein Exzentergestriebe periodisch in axialer Richtung hineingeschoben und hineingepreßt wird, wobei die Exzenterantriebskraft von dem Zugfahrzeugmotor über eine Zapfwelle mit einem Getriebe auf den Exzenter übertragen wird und eine Gegenkraft zur Preßkraft des Kolbens an den Strohballen im Preßkanal als Reibungskraft durch wandseitige Bremsflächen entsteht. Diese Bremsflächen sind durch hydraulische Stellmittel so verstellbar, daß der wirksame Kanalquerschnitt und somit die Preßkraft veränderbar ist. Die Stellmittel werden von einer Regelvorrichtung beaufschlagt, deren Ist-Größe aus dem Drehmoment, das am Zapfwellengetriebe auftritt, abgeleitet ist, so daß eine annähernd konstante Antriebskraft erreicht wird. Dies führt jedoch dazu, daß bei schneller Fahrt und hoher Antriebsgeschwindigkeit wegen der höheren Reibungs- und Massenkräfte eine geringere Preßkraft erreicht wird, wodurch dabei lockerere Ballen geringeren Gewichtes entstehen.

Weiterhin ist aus EP 02 23 351 eine Strohballenpresse solcher Art bekannt, in deren paarweise angeordneten Pleuelstangen des Preßkolbenantriebes je ein Preßdrucksensor angeordnet ist, deren Ausgangssignale in einer Signalverarbeitungsvorrichtung bezüglich ihrer Spitzenwerte aufbereitet werden, so daß deren Differenz nach Größe und Richtung dem Fahrer des Zugfahrzeuges zur Anzeige gebracht wird, damit durch geeignetes Lenken des Fahrzeuges ein über die Pressenbreite gleichmäßiges Aufnehmen von Stroh zu erreichen ist. Dies bedingt jedoch eine ständige Aufmerksamkeit des Fahrers, und dessen Reaktionszeit bewirkt unter Umständen starke zeitliche Schwankungen. Darüberhinaus kann bei Unachtsamkeit des Fahrers eine zu einseitige Beschickung der Presse erfolgen und dadurch ein Schiefziehen und im Extremfall ein Festsetzen des Preßkolbens auftreten. Außerdem ist die Signalgewinnung an den bewegten Pleuelstangenlagern aufwendig und störanfällig. Auch wird eine etwaige Kolbenverkantung nicht unmittelbar signalisiert; sondern es geben die auftretenden Druckwerte und -unterschiede an den Lagern nur einen indirekten Hinweis auf eine Verkantung..

Es ist Aufgabe der Erfindung, eine Regelvorrichtung an einer Ballenpresse zu offenbaren, die eine genauere und zuverlässigere Signalgewinnung beinhaltet, so daß Preßballen gleichmäßiger Pressung und Füllung fortlaufend erzeugt werden und extreme Belastungszustände der Ballenpresse vermieden werden sowie deren Störanfälligkeit verringert wird.

Die Lösung der Aufgabe besteht darin, daß der Sensor mindestens ein Lagesensor ist, der so bezüglich eines Widerlagerträgers des Exzentergetriebes an der Ballenpresse angeordnet ist, daß er eine jeweilige Lageveränderung des Widerlagerträgers infolge eines jeweiligen Preßdruckes signalisiert.

Vorteilhafte Ausgestaltungen sind in den Unteransprüchen angegeben.

In einer vorteilhaften Ausführung der Vorrichtung werden zwei Lagesensoren so zu dem Widerlager des Exzentergetriebes angeordnet, daß deren Signale jeweils sowohl die Preßkraft als auch die Symmetrielage des Preßkolbens angeben. Eine Auswertung der Signale zur Steuerung des Preßkanalwiderstandes erfolgt deshalb sowohl bezüglich der Preßkraft und darüberhinaus bezüglich der Überschreitung eines Preßkraftschwellenwertes sowie bezüglich von Schwellwertüberschreitungen einer Symmetrieabweichung der Preßkolbenlage nach der einen oder anderen Seite.

Eine Überschreitung des Schwellwertes bewirkt nichtlinear eine sofortige Erweiterung des Preßkanales. Darüberhinaus wird vorteilhaft eine Grenzwertüberwachung der Signalanteile bezüglich über den genannten Schwellwerten liegenden Grenzwerten laufend durchgeführt, deren im Grenzwert-Überschreitungsfall auftretendes Alarmsignal zu einer sofortigen Antriebsentkupplung genutzt wird.

Da die Meßsignale periodisch mit der Kolbenbewegung pulsieren, werden sie vorteilhaft aufbereitet, indem ihre Spitzenwerte mit einer Zeitkonstanten zwischengespeichert werden, die der Dauer mehrerer Preßzyklen entspricht.

Die Lagesensoren können so angeordnet sein, daß sie unmittelbar die elastische Durchbiegung eines Widerlagerträgers des Exzentergetriebes signalisieren, oder es können elastische Lagerelemente beidseitig des Widerlagerträgers angeordnet sein, was jeweils einen relativ größeren Meßweg bei einer gegebenen Belastung erbringt.

Als Lagesensoren lassen sich vorteilhaft induktiv berührungslos arbeitende Abstandsmelder verwenden. Ihre Meßsignale werden jeweils bezüglich eines antriebs- und preßkraftlosen Zustandes ausgewertet. Eine Nullpunktseichung erfolgt somit selbsttätig.

Eine weitere vorteilhafte alternative Lagesensoranordnung besteht darin, daß Lagesensoren seitlich des Preßkolbens sich gegenüberliegend angeordnet sind, durch die die Symmetrielageabweichung des Preßkolbens überwacht und gemessen wird. Das Differenzsignal der Sensorsignale ergibt ohne weitere Eichung bezüglich einer Anfangslage die Symmetriebabweichung des Preßkolbens zur Lage der beiden Sensoren. Die Symmetrieüberwachung erbringt zusätzlich eine Überwachung der Lagerspiele der hochbelasteten Exzenter- und Pleuelstangenlager.

Das aus den beiden aufbereiteten Preßdrucksignalen und/oder aus den aufbereiteten Symmetrieüberwachungssignalen gewonnene Differenzsignal wird vorteilhaft zu einer Steuerung der Deichsel der Ballenpresse bezüglich des Zugfahrzeuges genutzt, so daß eine Regelung zur Minimierung des Differenzsignales und somit einer symmetrischen Beschickung der Presse erfolgt. Hierfür ist ein hydraulisches Stellglied an der Deichsel angeordnet. Darüberhinaus kann eine sichtbare Anzeige des auftretenden Stellsignales, das dem Restdifferenzsignal entspricht, dem Fahrer gegeben werden, so daß dieser einen gegenwirkenden Mittelkurs halten kann.

Darüberhinaus ist eine Alarmanzeige bei Grenzwertüberschreitungen und bei unzulässiger Abweichung von der Kolbensymmetrielage vorgesehen.

Weiterhin wird der Pressendruck dem Fahrer angezeigt und/oder zur Regelung der Fahrgeschwindigkeit relativ zur Kolbenbewegung genutzt, so daß eine optimale Pressenleistungsausnutzung, insbesondere bei unterschiedlicher Strohlagerdichte, erreicht wird.

Die Erfindung ist anhand der Figuren 1 bis 6 in vorteilhaften Ausgestaltungen beschrieben.

Fig. 1 zeigt schematisch einen vertikalen axialen Schnitt durch den Vorderteil einer Strohballenpresse;

Fig. 2 zeigt ausschnittsweise die Strohballenpresse in Aufsicht mit einem Lagesensor;

Fig. 3 zeigt ein Blockschaltbild einer Preßkraftregelschaltung;

Fig. 4 zeigt vergrößert zu Fig. 1 den vertikalen Preßkanalquerschnitt mit Stellvorrichtung;

Fig. 5 zeigt eine Aufsicht einer Strohballenpresse mit geöffnetem Kanal; die Lagesensoren und das Zugfahrzeug sind teilweise gekürzt;

Fig. 6 zeigt ein Blockschaltbild einer Preßkraft- und Kolbenlage Symmetrieregelung.

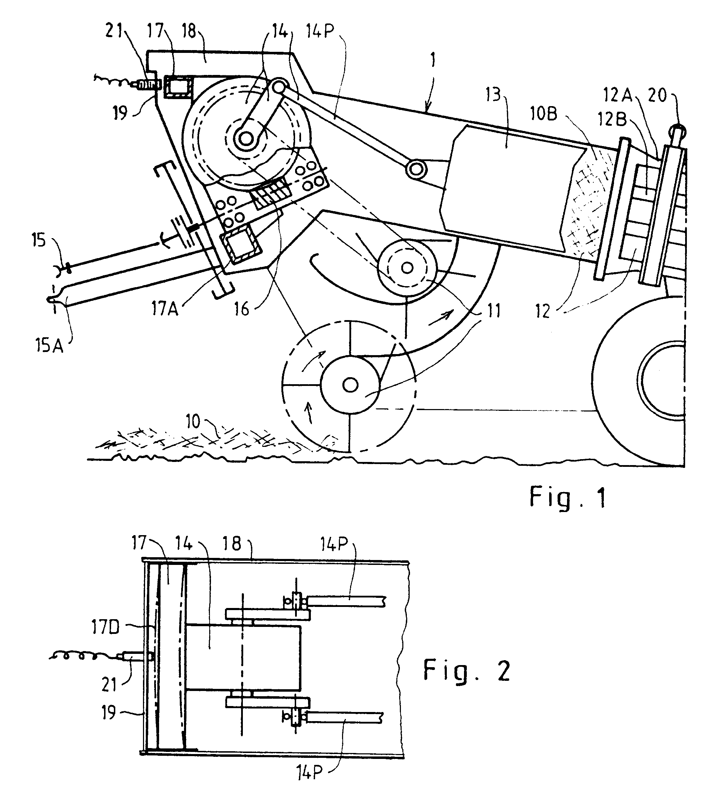

Fig. 1 zeigt schematisch einen vertikalen Schnitt durch den vorderen Bereich einer fahrbaren Strohballenpresse (1). Das Stroh (10) wird über den Elevator (11) in den Preßkanal (12) gefördert, in dem der Preßkolben (13) über ein Exzentergetriebe (14) axial hin- und herbewegt wird und kontinuierlich hinten austretende Preßballen (10B) erzeugt. Das Exzentergetriebe (14) ist von einem mit einer Deichsel (15A) angelenkten Zugfahrzeug über eine Zapfwelle (15) mit einem Schneckengetriebe (16) angetrieben. Das Exzentergetriebe (14) ist mit Widerlagerträgern (17, 17A) an den Seitenwandungen (18) abgestützt, die sich in den Preßkanal (12) erstrecken. Allseitig in den Preßkanal (12) ragen Bremsklappen (12A, 12B), die mit einem hydraulischen Stellzylinder (20) verschwenkbar sind, so daß der Preßkanalwiderstand steuerbar veränderlich ist.

An der Frontwand (19) ist ein induktiver Lagesensor (21) bezüglich des Widerlagerträgers (17) angeordnet, so daß dessen Ausgangssignal eine durch die Abstützung des Exzentergetriebes (14) erfolgende Durchbiegung des Widerlagerträgers (17) signalisiert und somit die von dem Preßkolben (13) über die Pleuelstangen (14P) des Exzentergetriebes übertragene Preßkraft angibt.

Fig. 2 zeigt eine vereinfachte, geöffnete Aufsicht zu Fig. 1, wobei der Preßkolben (13) in einer Stellung ist, in der sich der Exzenter in seiner pressenden Totpunktlage befindet, in der der Widerlagerträger (17) in die strichpunktiert gezeichnete Form (17D) durchgebogen ist. Der Lagesensor (21), der an der feststehenden Frontwand (19) mittig befestigt ist, detektiert diese Durchbiegung.

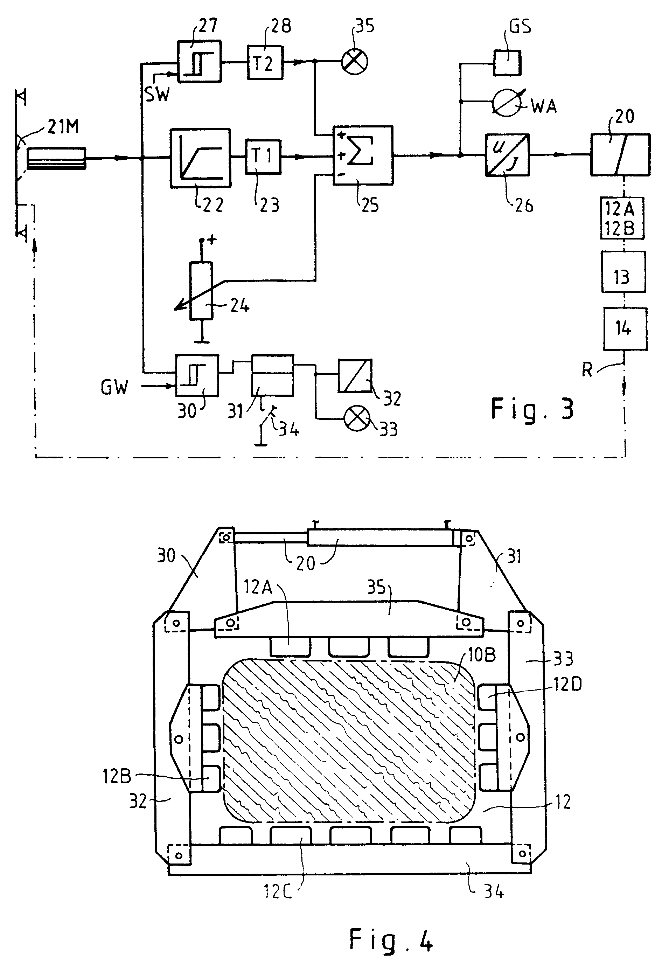

Fig. 3 zeigt ein Blockschaltbild, das die vollständige Regelschaltung der Preßkraft beinhaltet. Das Meßsignal des Lagesensors (21) ist einerseits einem linearen Verstärker (22) und andererseits einem Schwellwertdiskriminator (27) zugeführt. Das Ausgangssignal des linearen Verstärkers (22) wird einem Spitzengleichrichter (23) mit einer Zeitkonstanten (T1), die jeweils mehrere Signalperioden umfaßt, zugeführt und dadurch geglättet einem Summierer (25) zusammen mit einem Sollsignal eines Sollwertgebers (24) zugeführt. Die gebildete Differenz wird als Regelsignal einem hydraulischen Ventil (26) zugeführt, dessen Öldruck den Stellzylinder (20) beaufschlagt. Dieser wirkt auf dem Rückkoppelweg (R) über die Bremsklappen (12A, 12B und die Preßballen auf den Kolben (13) und weiter über die Pleuelstangen (14P) auf den Widerlagerträger (17), der somit rückgekoppelt den Lagesensor (21) beeinflußt. Somit wird unmittelbar ein Preßdrucksignal unabhängig von Getriebekräften und etwaigem Lagerspiel und mit festehendem Lagesensor gewonnen und zur Regelung genutzt.

Der Schwellwertdiskriminator (27) gibt nur dann ein von Null verschiedenes Ausgangssignal einer vorgegebenen Größe ab, wenn ein vorgegebener Schwellwert (SW) vom Sensorsignal überschritten wird. Das dann auftretende Ausgangssignal wird in dem Spitzengleichrichter (28) mit einer Zeitkonstanten (T2) gespeichert, die ausreichend bemessen ist, daß die Preßklappen (12A, 12B) sich völlig öffnen können, falls sie in ihrer engsten Stellung waren. Somit ist ein wirksamer Überlastschutz gegeben, der ein Weiterarbeiten ohne Eingriff seitens eines Bedieners erbringt.

Zur weiteren Absicherung von Extremlastfällen ist ein Grenzwertdiskriminator (30) vorgesehen, der das Sensorsignal mit einem Grenzwert (GW) vergleicht, der über dem Schwellwert (SW) des Schwellwertdiskriminators (27) liegt. Das Ausgangssignal des Grenzwertdiskriminators (30) setzt jeweils bei einer Überschreitung ein bistabiles Flipflop (31), dessen Ausgangssingal eine Antriebskupplung (32) der Zapfwelle löst und einen Alarmsignalgeber (33) beaufschlagt. Das Flipflop (31) läßt sich durch einen Löschkontakt (34) vom Bediener zurücksetzen. Als Vorwarnsignal wird das mit dem Zeitglied (28) geglättete Ausgangssignal des Schwellwertdiskriminators (27) auf eine weitere Anzeige (35) geführt.

Weiterhin ist vorteilhaft eine Widerstandsanzeige (WA) des Preßkanales vorgesehen, indem das Summierersignal zur Anzeige gebracht wird. Damit hat der Fahrer die Möglichkeit, eine optimale Auslastung der Presse durch eine Anpassung der relativen Fahrgeschwindigkeit zu erreichen, indem er durch eine jeweils geeignete Gangauswahl einen vorgegebenen Preßdruck bei weitgehend geöffnetem Preßkanal erbringt. Es ist auch eine automatische Betätigung der Gangschaltung (GS) des Fahrzeuges möglich, indem vom Summierer (25) ein Stellsignal der Gangschaltung (GS) derart wirkend zugeführt wird, daß jeweils ein um so höherer Gang gewählt wird, um so höher der Preßkanalwiderstand gesteuert ist. d. h. um so geringer der Preßdruck ist.

Fig. 4 zeigt einen Querschnitt durch den Preßkanal (12). Seine Wände sind als gegenseitig verschwenkbare Bremsklappen (12A - 12D) ausgebildet und an den Eckpunkten ihres Verbundrahmens (32, 33, 34, 35) unter Einfügung jeweils eines von zwei Schenkeln von Winkelhebel-Eckstücken (30, 31) gelenkig miteinander verbunden. An den beiden freien Schenkeln der Winkelhebelstücke (30, 31) greifen die Enden des hydraulischen Stellgliedes (20) einer Zylinder-Kolbenanordnung, gelenkig an. Bei der Beaufschlagung derselben, wird somit der Kanalquerschnitt allseitig verengt.

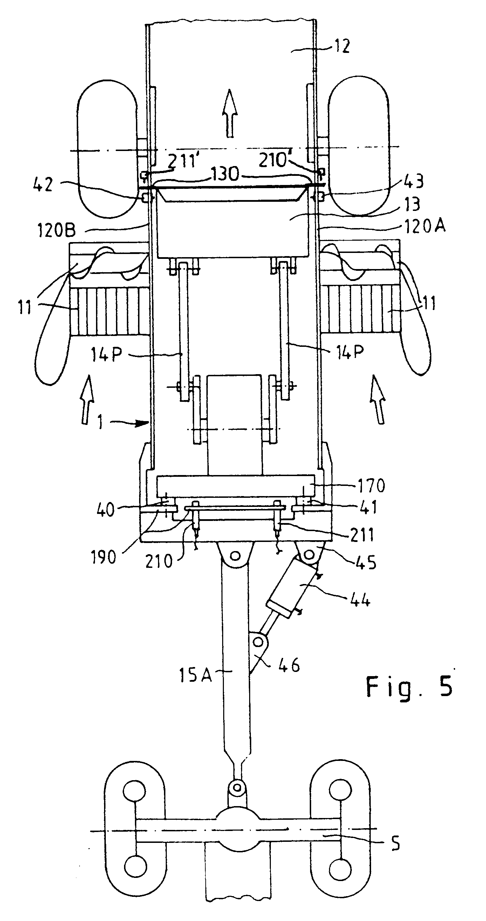

Fig. 5 zeigt geöffnet eine Aufsicht auf eine weitere Ausführung, bei der zwei Lagesensoren (210, 211) symmetrisch zur Mittelachse bezüglich des Widerlagerträgers (170) angeordnet sind. Ihr Lagedifferenzsignal ist mittelbar ein Maß für die Abweichung des Kolbens (13) zur mittleren Symmetrieachse und somit zu den Seitenwandelabschnitten (120A, 120B) im Kolbenbewegungsbereich. Der Widerlagerträger (170) ist vorteilhaft beidseitig über elastische Stützenelemente (40, 41) an der Frontwand (190) gelagert, so daß die Lagesensoren (210, 211), die in der Frontwand montiert sind, deren Pressung signalisieren.

Weiterhin sind in den Seitenwandabschnitten (120A, 120B) weitere Kolben-Lagesensoren (42, 43) bezüglich des Kolbens (13) angeordnet, so daß deren Differenzsignal unmittelbar eine seitliche Abweichung des Preßkolbens (13) aus der Symmetrielage signalisiert. Die Höhe des einzelnen Signales zeigt unmittelbar die Nähe des Preßkolbens (13) zur Wandung, in der der jeweilige Lagesensor (42, 43) angeordnet ist, an.

Die Ballenpresse (1) ist über den Lenker (15A) mit dem Zugfahrzeug (5) verbunden, so daß dessen Fahrweg unter Berücksichtigung der Schleppkurve bei Kurvenfahrten den Fahrweg der Ballenpresse (1) bestimmt und somit für die Aufnahme der Schwaden des Elevators (11), der sich unterhalb und beidseitig des Preßkanales (12) erstreckt, maßgeblich ist. Da ein symmetrisches Erfassen der Schwaden oder des getrennt liegenden Materials für eine gleichmäßige Pressenauslastung erforderlich ist, ist vorteilhaft zur Entlastung des Fahrers eine symmetrische Belastungsregelung vorgesehen, wozu an dem Lenker (15A) ein Lenkstellglied (44) angeordnet ist, indem ein Hydraulikzylinder (44) in einem Lager (46) mit dem Lenker (15A) gelenkig verbunden ist und er andererseits mit der Fronseite (45) der Ballenpresse (1) seitlich des Lenkers (15A) gelenkig verbunden ist. Somit führt eine Beaufschlagung des Hydraulikzylinders (44) zu einem entsprechenden Versatz der Achsen des Zugfahrzeuges (5) und der Ballenpresse (1). Der Hydraulikzylinder (44), der Lenker (15A) und das Chassis der Presse (1) bilden ein etwa horizontales Gelenkdreieck.

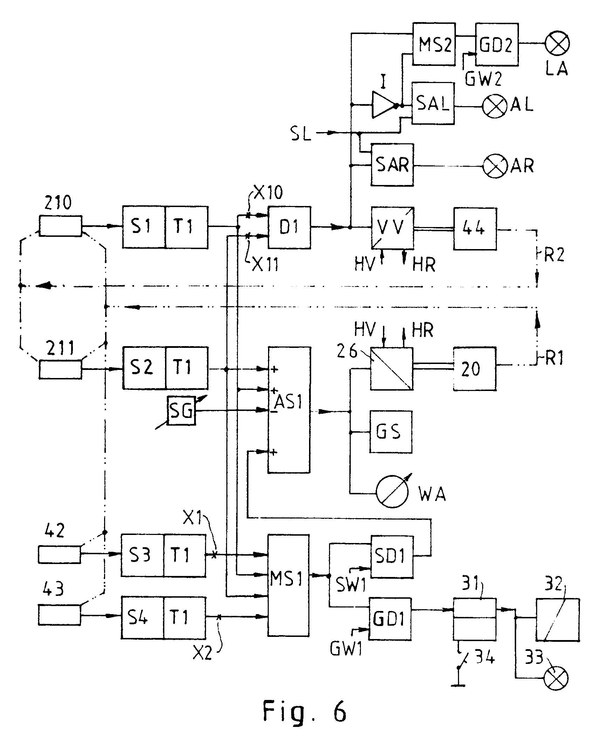

Fig. 6 zeigt ein Blockschaltbild anhand dessen die Verknüpfung der Lagesensoren (210, 211; 42, 43) und der Stellglieder (20, 44) in Regelkreisen mit den Rückkopplungen (R1, R2) dargestellt wird. Die Drucksignale der Lagesensoren (210, 211), die die Kolbenpreßkraft beidseitig angeben, werden ebenso wie die Kolbenlagesignale der Lagesensoren (42, 43), die die seitliche Kolbenlage beidseitig signalisieren, in jeweils zugeordneten Spitzenwertspeichern (S1, - S4) aufbereitet, deren Entladezeitkonstante (T1) mehrere Kolbenbewegungszyklen beträgt. In dem Summierer (AS1) werden die aufbereiteten Drucksignale addiert und mit einem Sollwertsignal eines Sollwertgebers (SG) verglichen. Das Vergleichsergebenissignal ist einer hydraulischen Ventilanordnung (26) zugeführt, die dieses Signal laufend in ein hydraulische Stellsignal umsetzt, das dem Stellzylinder (20) am Preßkanal zugeführt ist. Der dadurch veränderbare Preßwiderstand des Preßkanales wirkt auf den Kolben und dadurch auf die Lagesensoren (210, 211) zurück, so daß darüber ein erster Rückkoppelweg (R1) besteht.

Die aufbereiteten Drucksignale sind weiterhin einer Maximalwertschaltung (MS1) zugeführt, die jeweils das höchste der eingehenden Signale als Maximalwertsignal abgibt, das in einem ersten Schwellwertdiskriminator (SD1) mit einem ersten Schwellwert (SW1) verglichen wird, bei dessen Überschreitung dieser ergänzend ein Eins-Signal auf die Summierschaltung (AS1) abgibt, so daß dessen Stellsignal eine Erweiterung des Preßkanales auf dessen größten Querschnitt und kleinsten Preßwiderstand bewirkt.

Das Maximalwertsignal des Maximalwertbildners (MS1) wird außerdem in einem ersten Grenzwertdiskriminator (GD1) mit einem ersten Grenzwert (GW1) verglichen, bei dessen Überschreitung von dem Grenzwertdiskriminator (GW1) eine Alarmanzeige (33) bestromt wird und ein Störungsflipflop (31) gesetzt wird, das so gesetzt eine Auslösekupplung (32) des Zapfwellenantriebes trennend beaufschlagt. Mit einem Löschkontakt (34) läßt sich das Störungsflipflop (31) nach behobener Störung zurücksetzen, so daß der Zapfwellenantrieb wieder eingekuppelt werden kann.

Neben diesen Funktionen, die mit der Anordnung zur Verarbeitung von einem einzigen Preßdrucksignal gleichartig sind, ist eine Lenkregelungsfunktion gezeigt. Dazu werden die aufbereiteten Drucksignale einem Differenzbildner (D1) zugeführt, so daß an dessen Ausgang ein Differenzsignal entsteht, das die unsymmetrische Belastung des Kolbens anzeigt. Dieses Signal wird einem elektro-hydraulischen Umsetzer, einem hydraulischen Vierwegeventil (VV) steuernd zugeführt, das den Hydrauliklenkzylinder (44) ausgangsseitig proportional beaufschlagt und eingangsseitig an je eine Hydraulikvor- und -rücklaufleitung (HV, HR) angeschlossen ist, so daß ein das Differenzsignal entsprechende Kurskorrektur über einen Lenkerausschlag bewirkt wird.

Über die Veränderung der Lenkung wird nämlich ein seitlicher Versatz der Presse zu dem Zugfahrzeugt eingestellt, so daß eine entsprechend erhöhte Preßgutzufuhr auf der angesteuerten Seite erfolgt, auf der nämlich die Presskraft geringer war. In diesem Sinne erfolgt eine Rückkoppelung (R2) zu den Lagesensoren (210, 211).

Das Differenzsignal des Differenzbildners (D1) wird weiterhin direkt und über einen Inverter (I) je einem Schwellwertdiskriminator (SAR, SAL ) zugeführt und dort bezüglich eines Lenkungs-Schwellwertes (SL) verglichen, bei dessen Überschreitung jeweils eine Rechts- bzw. Linksfahranzeige (AR , AL ) betätigt wird, die dem Fahrer Korrekturhinweise bei großen Regelkorrekturen gibt. Auf diese Weise nimmt die Lenkregelung dem Fahrer weitgehend ab, ständig die Anzeige zu beobachten und zu korrigieren.

Das Differenzsignal des Differenzbildners (D1) ist weiterhin vorteilhaft direkt und invertiert über eine zweite Maximalwertschaltung (MS2) einem zweiten Grenzwertdiskriminator (GD2) zugeführt, der dieses mit einem vorgegebenen zweiten Grenzwert (GW2) vergleicht und bei Überschreitung desselben einen Alarmsignalgeber (LA) ansteuert, der den Fahrer auf eine notwendige Lenkkorrektur hinweist.

Eine ergänzende vorteilhafte Ausgestaltung der Schaltung besteht darin, daß die aufbereiteten Signale der Kolbenlagesensoren (42, 43) der Maximalwertschaltung (MS1) zugeführt werden, so daß auch jeweils bei einer starken seitlichen Lageabweichung des Preßkolbens der Preßkanal geöffnet wird und bei Überschreitung des vorgegebenen Grenzwertes (GW1) das Alarmsignal gegeben und das Störungsflipflop (31) gesetzt wird.

Statt der beiden Drucksignale können alternativ auch die aufbereiteten Kolben-Lagesignale von den bezeichneten Punkten (X1, X2), d.h. an die Eingänge (X10, X11) des Differenzbildners (D1) geführt sein, so daß deren Differenz die Lenkungsregelung bewirkt. Die Steuerung der Gangschaltung (GS) und der Widerstandsanzeige (WA) erfolgt mit dem Signal des Summierers (AS1) entsprechend wie im Beispiel Fig. 3.

Die Schaltungen gemäß Fig. 3 und 6 können auch mittels eines Mikroprozessors ausgeführt sein, indem fachmännisch die Signale der Lagesensoren (21; 210, 211; 42, 43) auf einen steuerbaren Meßmultiplexer geführt sind und dessen Ausgangssignal periodisch von dem Mikroprozessor übernommen und programmabhängig auf ihre Maximalwerte untersucht werden und diese dann zwischengespeichert und aufeinanderfolgend gemittelt werden. Diese so aufbereiteten Meßwerte werden dann programmgesteuert entsprechend einer Summierung, einer Differenz- und einer Maximalwertbildung unterzogen und dann mit den gespeicherten Schwell- und Grenzwerten (SW1, SL, GW1, GW2) verglichen. Die dann entstehenden Ergebnisse werden als Steuersignale entsprechend in digitaler Form oder analoggewandelt ausgangsseitig von dem Mikroprozessor an die Anzeigen (33 , LA, AR, AL, WA) und die Stellglieder (20, 44, 32, GS) ausgegeben.

In einer alternativen Anordnung der Sensoren (210, 211) in Fig. 5, die den Preßdruck auf die beiden Kolbenseiten ermitteln, sind zwei Sensoren (210', 211') am Gehäuse angeordnet, die diesbezüglich die Kolbenboden-Endlage zu beiden Seiten jeweils signalisieren. Hierzu sind zweckmäßig beidseitig am Kolbenboden seitlich durch Schlitze in den Gehäusewänden (120A, 120B) ragende Meldefahnen (130) befestigt, die mit den genannten Sensoren (210', 211') zusammenwirken.

**Patentansprüche**

1. Fahrbare Ballenpresse (1) mit einer Regelvorrichtung und mit einem in seinem Preßkanalwiderstand steuerbaren Preßkanal (12), der von einem frontseitig angeordneten Elevator (11) mit Preßgut beschickbar ist und in dem frontseitig ein axial hin- und herbeweglicher Preßkolben (13) an einem Exzentergetriebe (14) angeordnet ist, das über eine Zapfwelle (15) von einem Motor eines Zugfahrzeuges (5) antreibbar ist, und wobei von einem Sensor (21) ein den jeweiligen Preßdruck angebendes Signal der Regelvorrichtung, nämlich einer Summierschaltung (25, AS1) zugeführt ist, der außerdem ein Sollsignal umgekehrter Polarität eines Sollwertgebers (24, SG) zugeführt ist und dessen Ausgangssignal hydraulische Steuermittel (26, 20) des steuerbaren Preßkanals (12) derart beaufschlagen, daß je höher der gemessene Preßdruck ist, um so niedriger der Preßkanalwiderstand gesteuert ist,
dadurch gekennzeichnet, daß der Sensor (21) mindestens ein Lagesensor (21) ist, der so bezüglich eines Widerlagerträgers (17) des Exzentergetriebes (14) an der Ballenpresse (1) angeordnet ist, daß er eine jeweilige Lageveränderung des Widerlagerträgers (17) infolge eines jeweiligen Preßdruckes signalisiert.

2. Fahrbare Ballenpresse nach Anspruch 1 dadurch gekennzeichnet, daß der Widerlagerträger (17) frontseitig quer in der Presse (1) angeordnet ist und beidseitig elastisch gelagert ist.

3. Fahrbare Ballenpresse nach Anspruch 1 oder 2, dadurch gekennzeichnet, daß der Lagesensor (21) mittig an einer Frontwand (19) der Ballenpresse (1) so angeordnet ist, daß sich der Widerlagerträger (17) magnetfeldbeeinflussend in einem induktiv erfaßbaren Meßbereich (21M) des induktiv arbeitenden Lagesensors (21) befindet.

4. Fahrbare Ballenpresse nach einem der vorstehenden Ansprüche, dadurch gekennzeichnet, daß das Signal des Lagesensors (21) einer Aufbereitungsschaltung, die aus einem linearen Verstärker (22), gefolgt von einem Spitzengleichrichter (23) mit einer Zeitkonstanten (T1), die mehrere Perioden der Preßkolben-Hin- und Herbewegungen entspricht, besteht und deren Ausgangssignal der Summierschaltung (25) zugeführt ist.

5. Fahrbare Ballenpresse nach Anspruch 4, dadurch gekennzeichnet, daß das Signal des Lagesensors (21) einem Schwellwertdiskriminator (27) zugeführt ist, dem andererseits ein vorgegebener Schwellwert (SW) zugeführt ist und der ausgangsseitig ein Ausgangssignal abgibt, das ein Zeitglied (T2) triggert, dessen Ausgangssignal einen weiteren Eingang der Summierschaltung (25) beaufschlagt und dessen Zeitkonstante derart bemessen ist, daß der Preßkanalwiderstand in der entsprechenden Zeit von einem größten zu einem kleinsten Widerstandswert steuerbar ist.

6. Fahrbare Ballenpresse nach Anspruch 4 oder 5, dadurch gekennzeichnet, daß das Signal des Lagesensors (21) in einem Grenzwertdiskriminator (30) mit einem vorgegebenen Grenzwert (GW) ständig verglichen wird, der über dem Schwellwert (SW) liegt, und der Grenzwertdiskriminator (30) ausgangsseitig ein Störungsflipflop (31) jeweils bei einer Grenzwertüberschreitung triggert, das getriggert jeweils ausgangsseitig einen Alarmsignalgeber (33) und/oder eine Antriebskupplung (32) der Zapfwelle (15) lösend beaufschlagt.

7. Fahrbare Ballenpresse nach Anspruch 4, dadurch gekennzeichnet, daß das Ausgangssignal des Summierers (25) auf einen Widerstandsanzeiger (WA) geführt ist und/oder derart auf eine steurbare Gangschaltung (GS) des Zugfahrzeuges (5) geführt ist, daß dessen Fahrgeschwindigkeit um so höher relativ zu einer Zapfwellen- und Motordrehzahl ist, je niedriger das genannte Ausgangssignal ist.

8. Fahrbare Ballenpresse nach einem der Ansprüche 1 oder 2, dadurch gekennzeichnet, daß als der Lagesensor zwei Lagesensoren (210, 211) symmetrisch einer Mittelachse des Preßkolbens (13) entsprechend einer seitlichen Lage zweier Pleuelstangen (14P) des Preßkolbens (13), bezüglich des Widerlagerträgers (17) angeordnet sind und deren Ausgangssignale spitzengleichgerichtet und mit einer vorgegebener Zeitkonstanten (11) zwischengespeichert, die mehrere Preßkolbenbewegungsperioden umfaßt, jeweils summierend der Summierschaltung (AS1) zugeführt sind.

9. Fahrbare Ballenpresse nach Anspruch 8, dadurch gekennzeichnet, daß die spitzengleichgerichteten und zwischengespeicherten Ausgangssignale der Lagesensoren (210, 211) einem Maximalwertbildner (MS1) zugeführt sind, dessen jeweiliges Maximalwertsignal einem ersten Schwellwertdiskriminator (SD1) zugeführt ist, der jeweils bei Überschreitung eines ersten vorgegebenen Schwellwertes (SW1) ein Signal vorgegebener Größe einem Eingang des Summierers (AS1) zuführt.

10. Fahrbare Ballenpresse nach Anspruch 9, dadurch gekennzeichnet, daß das jeweilige Maximalwertsignal des Maximalwertbildners (MS1) einem ersten Grenzwertdiskriminator (GD1) zugeführt ist, dessen Ausgangssignal jeweils bei einer Überschreitung eines ersten vorgegebenen Grenzwertes (GW1) angezeigt wird und/oder ein Störungsflipflop (31) triggernd beaufschlagt, dessen Ausgangssignal eine Antriebskupplung (32) der Zapfwelle (15) lösend beaufschlagt.

11. Fahrbare Ballenpresse nach Anspruch 8, dadurch gekennzeichnet, daß die spitzengleichgerichteten und zwischengespeicherten Ausgangssignale der Lagesensoren (210, 211) einem Differenzbildner (D1) zugeführt sind, dessen Differenzsignal einem elektro-hydraulischen Wandler (VV) zugeführt ist, der ein hydraulishes Lenkstellglied (44) zwischen der Ballenpresse (1) und dem Zugfahrzeug (5) beaufschlagt.

12. Fahrbare Ballenpresse nach Anspruch 11, dadurch gekennzeichnet, daß das Lenkstellglied (44) ein Hydraulikzylinder (44) ist, der mit der Ballenpresse (1) und einem daran angelenkten Lenker (15A), der an das Zugfahrzeug (5) angehängt ist, ein etwa horizontal liegendes Gelenkdreieck bildet und daß der elektro-hydrauliche Wandler ein Vierwegeventil (VV) ist, an dessen Ausgänge der Hydraulikzylinder (44) beidseitig angeschlossen ist.

13. Fahrbare Ballenpresse nach Anspruch 11, dadurch gekennzeichnet, daß das Differenzsignal einer Anzeigevorrichtung zugeführt ist, wobei das Differenzsignal und das invertierte Differenzsignal jeweils über einen Schwellwertdiskriminator (SAR, SAL) geführt sind, deren Ausgangssignale jeweils bei Überschreitung eines vorgegebenen Lenkschwellwertes (SL) eine zugehörige Lenkanzeige (AA, AL) beaufschlagen.

14. Fahrbare Ballenpresse nach einem der Ansprüche 11 bis 13, dadurch gekennzeichnet, daß beidseitig des Preßkolbens (13) Kolbenlagesensoren (42, 43) so angeordnet sind, daß sie Kolbenlagesignale abgeben, die eine jeweilige seitliche Verlagerung des Preßkolbens (13) zu einer Mittellage bezüglich des Preßkanales (12) signalisieren, und diese Kolbenlagesignale spitzengleichgerichtet, mit einer Zeitkonstanten (T1), entsprechend mehrerer Kolbenhubzeiten, zwischengespeichert und danach dem Differenzbildner (D1) zugeführt sind.

15. Fahrbare Ballenprese nach Anspruch 14, dadurch gekennzeichnet, daß die spitzengleichgerichteten und zwischengespeicherten Kolbenlagesignale dem Maximalwertbildner (MS1) zugeführt sind.

16. Fahrbare Ballenpresse nach einem der vorstehenden Ansprüche, dadurch gekennzeichnet, daß die Summierer (25, AS1), die Schwellwert- und Grenzwertdiskriminatoren (27, 30; SD1, GD1; SAR, SAL), der Differenzbildner (D1), der Maximalwertbildner (MS1), die Spitzengleichrichtung und die zeitliche Zwischenspeicherung der Lagesignale durch ein Rechenwerk in Verbindung mit Speicher- und Programmteilen eines Mikroprozessors gebildet sind und die Signale der Lagesensoren (21; 210, 211; 42, 43) über einen steuerbaren Analog-digitalwandler dem Mikroprozessor programmgesteuert zugeführt sind und digitale bzw. analoggewandelte Ausgangssignale desselben den Stellgliedern (26, 32, GS; VV) und den Anzeigen (WA; AR, AL, 33) entsprechend programmgesteuert zugeführt sind.


## Claims

1. Mobile baler (1) with a servomechanism and with a compression channel (12) having controllable compression channel resistance, which channel can be charged with material for baling from a frontally disposed elevator (11) and in which an axially reciprocating compression plunger (13) is frontally arranged on an eccentric transmission (14) which can be driven via a power take-off shaft (15) by an engine of a towing vehicle (5), and a signal indicating the respective pressing power being fed from a sensor (21) to the servomechanism, namely to a summation circuit (25, AS1), to which additionally a setpoint signal of reverse polarity is fed from a setpoint generator (24, SG), and the output signal of which actuates hydraulic control means (26, 20) of the controllable compression channel (12) in such a way that the higher the pressing power measured, the lower the compression channel resistance is set,
characterised in that the sensor (21) is at least one position sensor (21), which is so disposed on the baler (1) relative to an abutment bracket (17) of the eccentric transmission (14) that it signals a given change in the position of the abutment bracket (17) as a result of a given pressing power.

2. Mobile baler according to claim 1, characterised in that the abutment bracket (17) is frontally arranged transversely in the baler (1) and is flexibly mounted on both sides.

3. Mobile baler according to claim 1 or 2, characterised in that the position sensor (21) is centrally arranged on a front wall (19) of the baler (1) such that the abutment bracket (17) is situated in an inductively detectable measurement range (21M) of the inductively operating position sensor (21) so as to influence the magnetic filed.

4. Mobile baler according to one of the preceding claims, characterised in that the signal from the position sensor (21) is fed to a processing circuit made up of a linear amplifier (22) followed by a peak value rectifier (23), with a time constant (T1) corresponding to a plurality of periods of the reciprocating compression plunger movements, and the output signal therefrom is fed to the summation circuit (25).

5. Mobile baler according to claim 4, characterised in that the signal from the position sensor (21) is fed to a threshold value discriminator (27), to which on the other hand a preset threshold value (SW) is fed and which on the output side emits an output signal which triggers a timer (T2) whose output signal actuates a further input of the summation circuit (25) and whose time constant is of a dimension such that the compression channel resistance can be controlled in the corresponding time from a maximum to a minimum resistance level.

6. Mobile baler according to claim 4 or 5, characterised in that the signal from the position sensor (21) is continually compared in a limit value discriminator (30) with a preset limit value (GW) above the threshold value (SW), and the limit value discriminator (30) on the output side triggers a malfunction flipflop (31) each time the limit value is exceeded, said triggered malfunction flipflop (31) in each case on its output side setting off an alarm emitter (33) and/or disengaging a driving clutch (32) of the power take-off shaft (15).

7. Mobile baler according to claim 4, characterised in that the output signal from the summing unit (25) is passed to a resistance indicator (WA) and/or is so passed to a controllable gearshift mechanism (GS) of the towing vehicle (5) that the latter's travelling speed is all the higher relative to a power take-off shaft speed and engine speed, the lower is said output signal.

8. Mobile baler according to one of claims 1 or 2, characterised in that as the position sensor two position sensors (210, 211) are arranged symmetrical to a central axis of the compression plunger (13), corresponding to a lateral position of two connecting rods (14P) of the compression plunger (13), relative to the abutment bracket (17), and the peaks of the output signals therefrom, rectified and stored temporarily with a preset time constant (T1) comprising a plurality of compression plunger movement periods, are fed, in each case summing, to the summation circuit (AS1).

9. Mobile baler according to claim 8, characterised in that the output signals from the position sensors (210, 211), once their peaks have been rectified and they have been temporarily stored, are fed to a maximum value calculator (MS1) whose respective maximum value signal is fed to a first threshold value discriminator (SD1), which each time a first preset threshold value (SW1) is exceeded sends a signal of predetermined magnitude to an output of the summing unit (AS1).

10. Mobile baler according to claim 9, characterised in that the respective maximum value signal from the maximum value calculator (MS1) is fed to a first limit value discriminator (GD1), the output signal from which is displayed each time a first preset limit value (GW1) is exceeded and/or a malfunction flipflop (31) triggered, the output signal from which actuates a driving clutch (32) of the power take-off shaft (15) so as to disengage said clutch.

11. Mobile baler according to claim 8, characterised in that the output signals from the position sensors (210, 211), once their peak values have been rectified and they have been temporarily stored, are fed to a differential calculator (D1) the differential signal from which is fed to an electro-hydraulic converter (VV), which actuates a hydraulic steering control member (44) between the baler (1) and the towing vehicle (5).

12. Mobile baler according to claim 11, characterised in that the steering control member (44) is a hydraulic cylinder (44) which together with the baler (1) and a control rod (15A) hinged thereon, which is attached to the towing vehicle (5), forms an approximately horizontal triangular articulation, and in that the electro-hydraulic converter is a four-way valve (VV), to the outputs of which the hydraulic cylinder (44) is connected on both sides.

13. Mobile baler according to claim 11, characterised in that the differential signal is fed to a display device, the differential signal and the inverted differential signal each being passed via a threshold value discriminator (SAR, SAL) the output signals from which activate an associated steering display (AR, AL) each time a preset steering threshold value (SL) is exceeded.

14. Mobile baler according to one of claims 11 to 13, characterised in that plunger position sensors (42, 43) are arranged on both sides of the compression plunger (13) such that they emit plunger position signals which in each case signal a sideways shift of the compression plunger (13) to a mid-position relative to the compression channel (12), and the peaks of these plunger position signals are rectified, the signals are stored temporarily with a time constant (T1), corresponding to a plurality of plunger stroke times, and then fed to the differential calculator (D1).

15. Mobile baler according to claim 14, characterised in that the plunger position signals, after their peaks have been rectified and they have been temporarily stored, are fed to the maximum valve calculator (MS1).

16. Mobile baler according to one of the preceding claims, characterised in that the summing units (25, AS1), the threshold and limit value discriminators (27, 30; SD1, GD1; SAR, SAL), the differential calculator (D1), the maximum value calculator (MS1), the peak value rectification and the chronological temporary storage of the position signals are formed by an arithmetic unit in conjunction with storage and program areas of a microprocessor and the signals from the position sensors (21; 210, 211; 42, 43) are fed program-controlled to the microprocessor via a controllable analog-to-digital converter and digital or analog-converted output signals from said microprocessor are fed correspondingly program-controlled to the actuators (26, 32, GS; VV) and to the displays (WA; AR, AL, 33).

**Revendications**

1. Presse à balles roulante (1) avec un dispositif de réglage et un conduit presseur (12) à résistance réglable alimenté frontalement en matière à presser par un élévateur (11) et équipé, frontalement, d'un piston de pressage (13), mobile axialement en va-et-vient, monté sur un engrenage excentrique (14) entraîné par le moteur d'un véhicule (15) par l'intermédiaire d'une prise de force (15), un signal, émanant d'une sonde (21) et indiquant la pression de pressage respective, étant transmis au dispositif de réglage, à savoir: un circuit additif (25, AS1), auquel, en outre, un signal de consigne d'une polarité inverse est lancé par un transmetteur de cotes prescrites (24, SG), et dont le signal de sortie influence les auxiliaires de commande hydrauliques (26, 20) du conduit presseur (12) de sorte que la résistance du conduit de pressage soit d'autant plus faible que la pression de pressage mesurée est plus élevée,

8

caractérisée par le fait que la sonde (21) est, au moins, un capteur de position (21), qui, installé sur la presse, est disposé par rapport à un contre-appui (17) de l'engrenage à excentrique (14) de sorte que toute modification de position du contre-appui (17) résultant d'une pression de pressage soit signalée.

2. Presse à balles roulante selon revendication 1, caractérisée par le fait que le contre-appui (17) est disposé transversalement dans la presse (1), côté frontal, et monté élastiquemnent des deux côtés.

3. Presse à balles roulante selon revendication 1 ou 2, caractérisée par le fait que le capteur de position (21) est disposé au centre d'une paroi frontale (19) de la presse à balles (1) de sorte que le contre-appui (17), influençant le champs magnétique, soit situé dans une plage de mesures (21M) du capteur de position (21) détectable inductivement.

4. Presse à balles roulante selon l'unes des revendications précédentes, caractérisée par le fait que le signal du capteur de position (21) est conduit à une commutation préparatoire, composée d'un amplificateur linéaire (22) suivi d'un redresseur à pointes (23), avec une constante de temps (T1) correspondant à plusieurs périodes des mouvements de va-et-vient du piston de pressage, et dont les signaux de sortie sont conduits au circuit additif (25).

5. Presse à balles roulante selon revendication 4, caractérisée par le fait que le signal du capteur de position (21) est conduit à un discriminateur de valeur seuil (27), auquel, d'utre part, une valeur seuil (SW) est amenée, et qui lance, côté sortie, un signal de sortie qui déclenche un système temporisé (T2), dont le signal de sortie atteint une autre entrée du circuit additif (25) et dont la constante de temps est mesurée de sorte que la resistance du conduit presseur soit réglable, au cours du temps correspondant, d'une valeur de résistance la plus élevée à une valeur de résistance la plus basse.

6. Presse à balles roulante selon revendication 4 ou 5, caractérisée par le fait que le signal du capteur de position (21) est constamment comparé, dans un discriminateur de valeur limite (30) avec une valeur limite prédéterminée (GW), située au-dessus de la valeur seuil (SW), et que le discriminateur de valeur limite (30) asservit, côte sortie, un flip-flop de perturbation (31), chaque fois que la valeur limite est surpassée, lequel, étant asservi, déclenche, côté sortie un transmetteur d'alarme (33) et/ou un accouplement d'entraînement (32) de la prise de force (15).

7. Presse à balles roulante selon revendication 4, caractérisée par le fait que la signal de sortie du circuit additif (25) est conduit à un indicateur de résistance (WA) et/ou à un changement de vitesse (GS) réglable du véhicule tracteur (5) de sorte que sa vitesse de marche soit d'autant plus élevée relativement à un nombre de tours de la prise de force et du moteur plus la signal de sortie est faible.

8. Presse à balles roulante selon revendication 1 ou 2, caractérisée par le fait qu'en tant que capteur de position, deux capteurs de position (210, 211) sont disposés, symétriquement par rapport à l'axe central du piston de pressage (13), conformément à une position latérale de deux bielles (14P) du piston de pressage (13), en ce qui concerne le contre-appui (17), et que leurs signaux de sortie, redressés en pointes et mémorisés intermédiairement avec une constante de temps (t1) prédéterminée, embrassant plusieurs periodes de mouvement du piston de pressage, sont conduits, additionnés, au circuit additif (AS1).

9. Presse à balles roulante selon revendication 8, caractérisée par le fait que les signaux de sortie des capteurs de position (210, 211), redressés et mémorisés intermédiairement, sont conduits à un formateur de de valeurs maximales (MS1), dont le signal de valeur maximale respectif est lancé à un premier descriminateur de valeur seuil (SD1), qui, chaque fois qu'une première valeur seuil (SW1) prédéterminée est surpassée, conduit un signal de grandeur prédéterminée à une entrée du circuit additif (AS1).

10. Presse à balles roulante selon revendication 9, caractérisée par le fait que le signal de valeur maximale respectif du formateur de valeurs maximales (MS1) est conduit à un premier descriminateur de valeur limite (GD1), dont le signal de sortie, lors de chaque surpassement d'une première valeur limite prédéterminée (GW1) est affiché et/ou déclenche un flip-flop de perturbation (31), dont le signal de sortie asservit un accouplement d'entraînement (32) de la prise de force (15).

11. Presse à balles roulante selon revendication 8, caractérisée par le fait que les signaux de sortie redressés à pointes et mémorisés temporairement des capteurs de position (210, 211) sont conduits à un formateur de différence (D1), dont le signal de différence est conduit à un transformateur électrohydraulique (VV), qui asservi un composant de réglage de conduite (44) entre la presse à balles (1) et le véhicule tracteur (5).

12. Presse à balles roulante selon revendication 11, caractérisée par le fait que le composant de réglage de conduite (44) est une vérin hydraulique (44), formant avec la presse à balles (1) et un bras de conduite (15A), accroché au véhicule tracteur (5) un triangle articulé à peu près horizontal et que la transformateur électrohydraulique est une soupape à quatre voies (VV), aux sorties de laquelle le vérin hydraulique (44) est raccordé bilatéralement.

13. Presse à balles roulante selon revendication 11, caractérisée par le fait que le signal de différence est conduit à un dispositif d'affichage, le signal de différence et le signal de différence inverti étant respectivement conduits en passant par un descriminateur de valeur seuil (SAR, SAL), dont les signaux de sortie asservissent, respectivement un affichage de conduite correspondante (AR, AL), chaque fois que la valeur seuil de conduite (SL) prescrite est surpassée.

14. Presse à balles roulante selon l'une des revendications 11 à 13, caractérisée par le fait que, des deux côtés du piston de pressage (13), des capteurs de position du piston (42, 43) sont disposés de sorte à lancer des signaux de position de piston, signalisant un décalement latéral du piston de pressage (13) par rapport à une position médiane, relative au conduit de pressage (12), et que ces signaux, redressés par le redresseur à pointes, sont mémorisés temporairement avec une constante de temps (T1), correspondant à plusieurs temps de course du piston, puis conduits au formateur de différence (D1).

15. Presse à balles roulante selon revendication 14, caractérisée par le fait que les signaux de position du piston, redressés à pointes et mémorisés temporairement, sont conduits au formateur de valeurs maximales (MS1).

16. Presse à balles roulante selon revendication 14, caractérisée par le fait que le circuit additif (25, AS1), les discriminateurs de valeur seuil et valeur limite (27, 30; SD1, GD1; SAR, SAL), le formateur de différence (D1), le formateur de valeurs maximales (MS1), le redresseur à pointes et la mémoire intermédiaire pour les signaux de position sont formés par un calculateur en relation avec des éléments de mémorisation et de programmation d'un microprocesseur et que les signaux de capteurs de position (21; 210, 211; 42, 43) sont conduits , commandés par programmes, au microprocesseur par l'intermédiaire d'un convertisseur analogue-numérique dirigible et que les signaux de sortie numériques et analogiquement convertis de ceux-ci sont conduits aux composants de réglage (26, 32, GS; W) et aux affichages (WA; AR, AL, 33), adéquatement commandés par programmes.

Fig. 1

Fig. 2

Fig. 3

Fig. 4

Fig. 5

Fig. 6